# EUROPEAN PATENT APPLICATION

(11) **EP 3 502 883 A1**
(43) Date of publication of application: **26.06.2019**
(21) Application number: 18212560.9
(22) Date of filing: 14.12.2018
(51) Int. Cl.: G06F 9/451

(54) **METHOD, DEVICE, TERMINAL AND STORAGE MEDIUM FOR LOADING APPLICATION**

(30) Priority: 14.12.2017 CN 201711340000
(71) Applicant: GUANGDONG OPPO MOBILE TELECOMMUNICATIONS CORP., LTD., Dongguan, Guangdong 523860 (CN)
(72) Inventor: CHEN, Yan, Dongguan, Guangdong 523860 (CN); LIU, Yaoyong, Dongguan, Guangdong 523860 (CN)
(74) Representative: Manitz Finsterwald Patent- und Rechtsanwaltspartnerschaft mbB

(57) **Abstract**

The present application discloses a method, a device, a terminal and a storage medium for processing an application, and relates to the field of application processing technology, the method includes: acquiring status data, where the status data indicating a running status of the terminal; determining, according to the status data, a target application to be preloaded; displaying an application window corresponding to the target application in the virtual screen, where a display area corresponding to the virtual screen is located outside a display area corresponding to the physical screen; and migrating the application window corresponding to the target application to the physical screen in response to receiving a running instruction of the target application. In the embodiment of the present application, when the target application needs to be run, the terminal only needs to migrate the application window in the virtual screen to the physical screen without reloading the application resource of the target application, thereby improving the display efficiency of the application interface, solving the problem of display delay of the application interface.

## Description

### CROSS-REFERENCE TO RELATED APPLICATIONS

The present application claims priority to Chinese application number 201711340000.6, filed on December 14, 2017, which is incorporated by reference in its entirety.

### TECHNICAL FIELD

The embodiments of the present application relate to the field of application processing technologies and, in particular, to a method, a device, a terminal, and a storage medium for processing an application.

### BACKGROUND

With the continuous development of terminals such as mobile phones and tablet computers, the types of applications installed in the terminals are also increasing to meet the different requirements of users.

When the user needs to use an application, the application is selected from the application list. Accordingly, the terminal reads the application resource of the application according to the user's selection, and then loads the application resource to complete the application startup, and finally displays the initial interface of the application.

### SUMMARY

Embodiments of the present application provides a method, device and terminal for processing application, which can be used to solve the problem that it takes a long time to load the application, resulting in a large delay in the application interface display. The technical solution is as follows:
According to a first aspect of the present application, a method for processing application is provided, the method including:
Acquiring status data, where the status data indicating a running status of a terminal;
Determining, according to the status data, a target application to be preloaded;
Displaying an application window corresponding to the target application in a virtual screen, where a display area corresponding to the virtual screen is located outside a display area corresponding to the physical screen; and
Migrating the application window corresponding to the target application to the physical screen in response to receiving a running instruction of the target application.

According to a second aspect of the present application, a device for processing application is provided, the device includes:
A data acquiring module, configured to acquire status data, where the status data indicating a running status of the terminal;
A determining module, configured to determine, according to the status data, a target application to be preloaded;
A displaying module, configured to load the target application and display an application window corresponding to the target application in a virtual screen, where a display area corresponding to the virtual screen is located outside a display area corresponding to the physical screen; and
A migrating module, configured to migrate the application window corresponding to the target application to the physical screen in response to receiving a running instruction of the target application.

According to a third aspect of the present application, a terminal including a processor and a memory is provided, the memory stores at least one instruction loaded and executed by the processor to implement the method for processing application as described in the first aspect.

According to a fourth aspect of the present application, a computer readable storage medium is provided, the storage medium stores at least one instruction loaded and executed by a processor to implement the method for processing application as described in the first aspect.

The beneficial effects brought by the technical solutions provided by the embodiments of the present application are:
In the embodiment of the present application, the terminal determines the target application to be preloaded according to the status data, and then loads the target application in advance, and displays the application window corresponding to the target application in the virtual screen, when the target application needs to be run, the terminal can directly migrate the application window displayed in the virtual screen to the physical screen for display. After the target application is preloaded by the above preloading mechanism, when the target application needs to be run, only needs to migrate the application window in the virtual screen to the physical screen without reloading the application resource of the target application, thereby improving the display efficiency of the application interface, solving the problem of display delay of the application interface; at the same time, since the virtual screen is located outside the display area of the physical screen, the display content in the virtual screen does not affect the display content in the physical screen, and the normal running of the foreground application is guaranteed.

### BRIEF DESCRIPTION OF THE DRAWINGS

In order to more clearly illustrate the technical solutions in the embodiments of the present application, the drawings used in the description of the embodiments will be briefly described below. It is obvious that the drawings in the following description are only some embodiments of the present application. Other drawings may also be obtained by those of ordinary skill in the art without creative work according to these drawings.
FIG. 1 is a flowchart of a method for processing application provided by an example embodiment of the present application;
FIG. 2 is a schematic diagram showing a relative position of a virtual screen and a physical screen provided by an example embodiment of the present application;
FIG 3 is a flowchart of a method for processing application provided by another example embodiment of the present application;
FIG. 4 is a schematic diagram of the implementation of predicting a target application by a prediction model;
FIG. 5 is a schematic diagram of the implementation of an application window migration process in a virtual screen;
FIG. 6 is a structural diagram of a device for processing application provided by an example embodiment of the present application; and
FIG. 7 is a schematic structural diagram of a terminal provided by an example embodiment of the present application.

### DETAILED DESCRIPTION OF THE EMBODIMENTS

In order to make the objects, technical solutions and advantages of the present application more clear, the embodiments of the present application will be further described in detail below with reference to the accompanying drawings.

First, some terms related to the present application are introduced.

Prediction Model: a mathematical model used to predict a target application that needs to be preloaded based on input data.

The prediction model is obtained by training based on the sample status data and sample application data. The sample status data is status data indicating the running status of the terminal; the sample application data indicating the target application that needs to be preloaded in the aforementioned running status.

Optionally, sample status data and sample applications are stored in the sample database. The sample database includes at least one set of samples, each set of samples including sample status data and sample application data collected at the same time.

Optionally, the status data includes, but is not limited to, at least one of the following:
Data indicating the time period in which the current time is. For example, if the 24 hours of the day are divided into one period every 10 minutes, then 144 time periods are obtained, where the status data i indicates that the time period at which the current time is located is the i-th time period, 1≤i≤144, i is an integer. Of course, the time period may be divided according to other manners, and the durations of the different time periods may be the same or different, which is not limited in this implementation.

Data indicating application running in the foreground. For example, the status data APP1 indicates xx browser running in the foreground, the status data APP2 indicates xx social application running in the foreground, and the status data APP3 indicates xx shopping application running in the foreground. Of course, the application may also be represented by other data, which is not limited in present application.

Data indicating the current geographic location. For example, the terminal determines the location according to the geographic location data, and further uses the status data ADD1 to indicate that the geographic location indicates that the terminal is in the store, uses the status data ADD2 indicates that the terminal is in the bus station, uses the status data ADD3 indicates that the terminal is in the home, and the like. Of course, other geographic data may also be used to indicate the current geographic location, which is not limited in present application.

Optionally, the prediction model includes, but is not limited to, at least one of a Logistic Regression (LR) model and a Bayesian model.

Of course, the prediction model can also be other models, such as: Deep Neural Network (DNN) model, Recurrent Neural Networks (RNN) model, embedding model, Gradient Boosting Decision Tree (GBDT) model, etc., which is not listed here one by one in this embodiment.

The DNN model is a deep learning framework. The DNN model includes an input layer, at least one hidden layer (or intermediate layer), and an output layer. Optionally, the input layer, each of the at least one hidden layer (or intermediate layer), and the output layer include at least one neuron for processing the received data. Alternatively, the number of neurons of different layers may be the same; or it may be different.

The RNN model is a neural network with a feedback structure. In the RNN model, the output of the neuron can be directly applied to itself at the next timestamp, i.e., the input of the i-th layer neuron at time m also includes its own output at time (m-1) in addition to the output of the (i-1) layer neuron at that time.

The embedding model is based on entity and relational distributed vector representations, and the relationship in each triple instance is regarded as a translation from the entity head to the entity tail. Where, the triple instance includes the subject, the relationship, and the object, and the triple instance can be represented as (subject, relationship, object); the subject is the entity head, and the object is the entity tail. For example, Xiaoming's father is Darning, and it is represented as a triple instance (Xiaoming, father, Darning).

The GBDT model is an iterative decision tree algorithm consisting of multiple decision trees, and the results of all trees are added together as the final result. Each node of the decision tree gets a predicted value, taking the age as an example, the predicted value is the average of the ages of all the people belonging to the node corresponding to the age.

The method for processing application provided by the various embodiments of the present application is executed by a terminal, which may be a smart phone, a tablet computer or a portable computer, etc., the terminal has a function of creating a virtual screen, and the terminal may display an application window obtained by loading the application in the virtual screen. The virtual screen has the same size as the physical screen, and there is no intersection between the display areas of the virtual screen and the physical screen. For convenience of description, the following embodiments are described by taking the method for processing application applied to a terminal as an example.

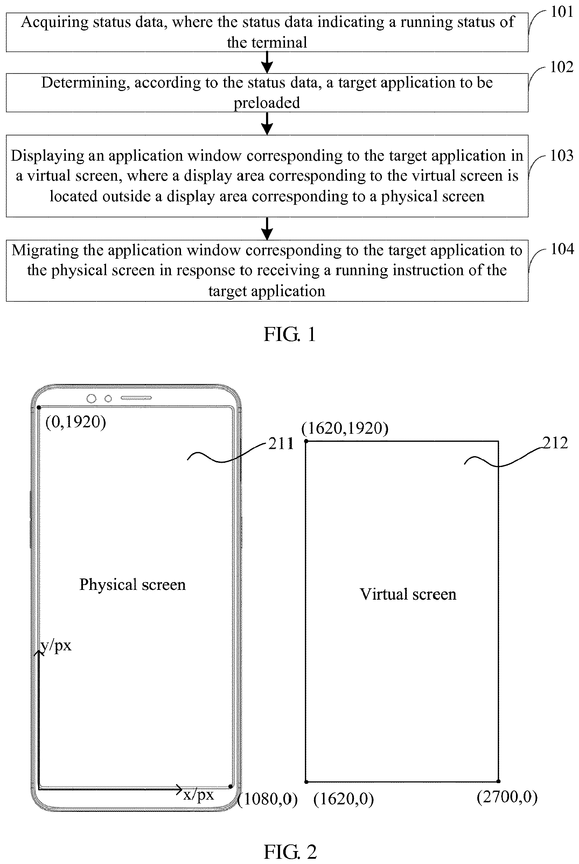

Referring to FIG. 1, a flow chart of a method for processing application provided by an example embodiment of the present application is shown. This embodiment is exemplified by applying the method to a terminal. The method includes:
Step 101, acquiring status data, and the status data indicating a running status of a terminal.

In this embodiment, the terminal preloads the target application to be run by the user. When receiving the running instruction of the target application, since the target application is already preloaded, the efficiency of displaying the application interface is correspondingly improved.

In general, the application that needs to be preloaded is different in different running status of the terminal.

For example, every day from 7:00-9:00 in the morning, users need to open the xx headline to get news of the day. That is, when the time period corresponding to current time is 7:00-9:00, the terminal needs to preload xx headlines.

Therefore, before determining the target application to be preloaded, the terminal acquires the status data, and then determines the target application that needs to be preloaded according to the status data.

Optionally, the terminal collects status data every preset duration. The preset duration is set by the terminal by default; or, the preset duration is received by the operating system through the human-computer interaction interface. This embodiment does not limit the value of the preset duration. Schematically, the preset duration is 15 minutes.

The status data includes, but is not limited to, at least one of the following: data indicating a time period in which the current time is, data indicating an application running in the foreground, and data indicating a current geographical location.

Step 102: determining, according to the status data, a target application to be preloaded.

Correspondingly, after the terminal acquires the status data, the target application to be preloaded is determined according to the status data, where the determined number of pre-loaded target applications is at least one.

In a possible implementation, the terminal counts the number of times each application is opened in each time period, and stores the correspondence between the time period and the application with the most open times according to the statistical result, and then determines the target application according to the time period to which the current time belongs.

Schematically, the correspondence between the time period and the application with the most open times in the time period is as shown in Table 1:

**Table 1**

| Time period | Application |
|---|---|
| 48 (8:00-8:10) | xx news program |
| 54 (9:00-9:10) | xx social application |
| 60 ( 10:00-10:10 ) | xx shopping application |
| ... | ... |

For example, when the obtained status data indicates that the current time period is 60, the terminal can obtain that the target application is the xx shopping application by querying Table 1.

Optionally, the terminal determines, according to the number of times of opening each application in each time period, the first n applications (n≥2) that have the highest number of open times, and then determines the n applications as the target applications, and this embodiment does not limit the number of the target applications that are determined.

In another possible implementation, the terminal pre-establishes a prediction model. When it is required to determine the pre-loaded target application, the terminal inputs the status data into the prediction model to obtain the pre-loaded the target application output by the prediction model. The prediction model is obtained by training through machine learning algorithm based on the sample status data and the sample application.

Step 103: displaying an application window corresponding to the target application in a virtual screen, where a display area corresponding to the virtual screen is located outside a display area corresponding to a physical screen.

After the terminal determines the target application, the target application is loaded, and the target application is displayed in the created virtual screen.

The size of the virtual screen is the same as the size of the physical screen, and each virtual screen corresponds to one target application.

In a possible implementation, when the terminal needs to preload a plurality of target applications, multiple virtual screens are created in advance, and the application windows corresponding to the respective target applications are respectively displayed in the corresponding virtual screens.

In order to prevent the application window displayed in the virtual screen from affecting the content currently displayed on the physical screen, the display area corresponding to the virtual screen is located outside the display area corresponding to the physical screen.

Illustratively, as shown in FIG. 2, a cartesian coordinate system is established with the lower left vertex of the physical screen 211 as a coordinate origin, where the display range of the display area corresponding to the physical screen 211 is (0,0)-(1080,1920), the range of the display area corresponding to the created virtual screen 212 is (1620,0)-(2700,1920).

After the target application is loaded, the terminal displays the application window corresponding to the target application in the virtual screen. Since the range of the display area of the virtual screen is not within the range of the display area corresponding to the physical screen, the application window displayed on the virtual screen does not affect the display of the content on the physical screen.

Step 104: migrating the application window corresponding to the target application to the physical screen in response to receiving a running instruction of the target application.

Optionally, when the terminal receives the click signal of the icon corresponding to the target application, the terminal receives the running instruction of the target application.

Since the target application has been loaded in advance and the application window corresponding to the target application is displayed on the virtual screen, the terminal can migrate the displayed application window to the display range corresponding to the physical screen in response to receiving the running instruction of the target application to improve the display efficiency of the application window.

Accordingly, the application displayed on the physical screen switches to the background.

Optionally, the terminal migrates the application window to a display range corresponding to the physical screen by changing a coordinate range of the display area corresponding to the virtual screen.

In conjunction with the example in step 103, in response to receiving the running instruction of the target application, the terminal changes the display coordinate range of the virtual screen 212 to (0,0)-(1080,1920), because the display area of the virtual screen 212 is the same as the display area of the physical screen 211 at this time, so that the application window corresponding to the target application can be displayed in the display area of the physical screen 211.

Optionally, after the terminal migrates the application window to the physical screen, the virtual screen is removed to save memory space.

In summary, in the embodiment of the present application, the terminal determines the target application to be preloaded according to the status data, and then loads the target application in advance, and displays the application window corresponding to the target application in the virtual screen, when the target application needs to be run, the terminal can directly migrate the application window displayed in the virtual screen to the physical screen for display. After the target application is preloaded by the aforementioned preloading mechanism, when the target application needs to be run, only needs to migrate the application window in the virtual screen to the physical screen without reloading the application resource of the target application, thereby improving the display efficiency of the application interface, solving the problem of display delay of the application interface; at the same time, since the virtual screen is outside the display area of the physical screen, the display content in the virtual screen does not affect the display content in the physical screen, and normal running of the foreground application is guaranteed.

In a possible implementation, the terminal pre-trains the prediction model according to the actual usage habit of the user. When it is required to determine the pre-loaded target application, the terminal obtains the target application according to the prediction model to improve the accuracy of the determined target application.

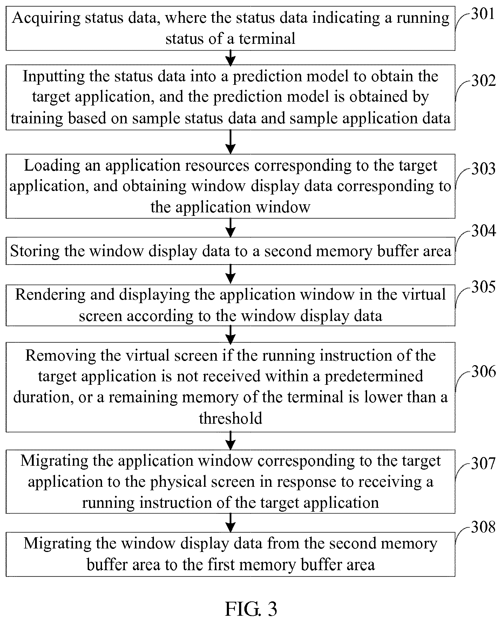

Referring to FIG. 3, a flow chart of a method for processing application provided by an example embodiment of the present application is shown. This embodiment is exemplified by applying the method in a terminal. The method includes:
Step 301, acquiring status data, where the status data indicating the running status of the terminal.

In a possible implementation, the terminal collects basic data every preset duration, and preprocesses the basic data to obtain status data.

Optionally, when the basic data is the current time, pre-processing the basic data includes: determining a time period to which the current time belongs, and converting the current time into status data according to the result of the determining.

For example, the 24 hours of the day are divided into one period every 10 minutes, and 144 time periods are obtained. The status data i indicates that the time period that the current time belongs to is the i-th time period, 1≤i≤144, and i is an integer. If the current time is 10:09, the terminal determines that the current time period that the current time belongs to is the 60th time period, and obtains the status data as 60.

Optionally, when the basic data is a program identifier of an application running in the foreground, pre-processing the basic data includes: converting the program identifier into status data according to a correspondence between the program identifier and the status data.

For example, when the program identifier is xx browser, the terminal acquires the status data as APP1; when the program identifier is xx social application, the terminal acquires the status data as APP2; when the program identifier is xx shopping application, the terminal acquires the status data as APP3.

Optionally, when the basic data is the current geographic location, the pre-processing of the basic data includes: converting the geographic location into status data according to the correspondence between the geographic location and the status data.

For example, when the current geographic location indicates that the terminal is in the store, the converted status data is ADD1; when the current geographic location indicates that the terminal is at the bus station, the converted status data is ADD2; when the current geographic indication it is in the user's home, the converted status data is ADD3.

Step 302: inputting the status data into a prediction model to obtain the target application, and where the prediction model is obtained by training based on sample status data and sample application data.

Optionally, the terminal stores a sample database, where the sample database includes at least one set of samples, and each set of samples includes sample status data and sample application data collected during the running of the terminal.

For the training mode of the prediction model, optionally, the prediction model has three training modes, where the sample status data used for training the prediction model is data indicating the time period in which the current time is, data indicating the application running in the foreground, and data indicating the current geographic location.

In the first implementation, the terminal acquires an application identifier of the application running in different time periods; and trains the prediction model based on the time period and the application identifier as the sample application data.

Usually, a user often opens a specific application within a specific time period. Therefore, the terminal can determine the target application that needs to be preloaded according to the time period to which the current time belongs.

In the training stage of the prediction model, the terminal obtains the application identifier of the application running in different time periods during the running process, and uses the time period as the input of the prediction model (i.e., as the sample status data), and uses the application identifier as the output of the prediction model (i.e., as the sample application data) to train the prediction model.

Correspondingly, in the using stage of the prediction model, the terminal acquires the time period to which the current time belongs (i.e., status data), and inputs the time period into the prediction model, thereby acquiring the target application outputted by the prediction model.

In a second embodiment, an application jumping record is obtained, where the application jumping record indicating that the first application jumps to the second application; the application identifier of the first application is used as sample status data, and the application identifier of the second application is used as sample application data to train the prediction model;

Usually, the user often opens the second application after opening the first application. For example, when the user opens the camera to take a photo, the album is often opened for browsing. Therefore, the terminal can determine the target application that needs to be preloaded based on the application running in the foreground.

In the training stage of the prediction model, the terminal acquires the identifier of the first application and the identifier of the second application, the first application and the second application are respectively running in the foreground before and after the application jumping during the running process, and the application identifier of the first application is used as an input of the prediction model (i.e., as the sample status data), the application identifier of the second application is used as the output of the prediction model (i.e., as the sample application data) to train the prediction model.

Correspondingly, in the using stage of the prediction model, the terminal acquires the application identifier (i.e., the status data) of the application running in the foreground, and inputs the application identifier into the prediction model, thereby acquiring the target application outputted by the prediction model.

In the third implementation, the application opening record is acquired, where the application opening record includes the geographic location data and the application identifier of the opened application; the geographic location data is used as the sample status data, the application identifier is used as the sample application data, to train the prediction model.

Typically, users often open a specific application in a specific geographic location. For example, when the current geographic location indicates that the terminal is in the store, the user needs to open the payment application for payment. Therefore, the terminal can determine the target application to be loaded according to the current geographic location.

In the training stage of the prediction model, the terminal acquires the application opening record during the running process, and uses the geographic location data contained in the application opening record as the input of the prediction model (i.e., as the sample status data), and uses the application identifier as the output of the prediction model (i.e., as the sample application data) to train the prediction model.

Correspondingly, in the using stage of the prediction model, the terminal acquires the current geographic location data (i.e., the status data), and inputs the geographic location data into the prediction model, thereby obtaining the target application outputted by the prediction model.

It should be noted that the prediction model in this embodiment may also be obtained according to any two or three of the aforementioned three sample status data. This embodiment does not limit the sample status data used to train the prediction model.

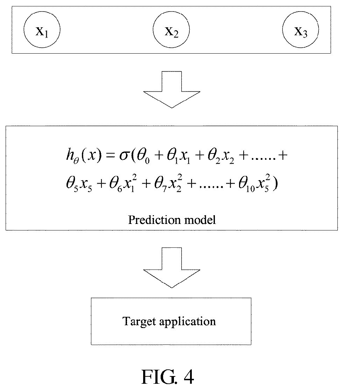

In a possible implementation, the aforementioned prediction model is a logistic regression model. Referring to FIG. 4, if the status data includes data x₁ indicating a time period to which the current time belongs, data x₂ indicating an application running in the foreground, and x₃ indicating the current graphic location, then the x₁, x₂ and x₃ are inputted into the logistic regression model, and processed by the logistic regression model to obtain the target application.

Optionally, the number of target applications outputted by each logistic regression model is 1, and the prediction model may include multiple logistic regression models to obtain multiple target applications.

In other possible implementations, the prediction model may also be a Bayesian model, a Deep Neural Network (DNN) model, a Recurrent Neural Networks (RNN) model, an embedding model, and a Gradient Boosting Decision Tree (GBDT) model and the like, which are not listed one by one in this embodiment.

Step 303: loading application resources corresponding to the target application, and obtaining window display data corresponding to the application window.

After determining the pre-loaded target application, the terminal loads the application resource corresponding to the target application to obtain window display data for rendering the application window in the application resource, where the window display data includes at least the location parameters of the respective controls displayed in the application window and the icon material data of the icon in the application window.

Step 304, storing the window display data to a second memory buffer area.

In order to distinguish the display content of the physical screen and the display content of the virtual screen, in the embodiment, the display content of the physical screen is stored in the first memory buffer area, and the display content of the virtual screen is stored in the second memory buffer area which is different from the first memory buffer area. Correspondingly, when the running application is displayed in the physical screen, the terminal acquires the window display data corresponding to the application from the first memory buffer area; when the running application is displayed in the virtual screen; the terminal acquires the window display data corresponding to the application from the second memory buffer area.

In a possible implementation, after acquiring the window display data corresponding to the application window, the terminal divides the second memory buffer area in the memory buffer area, and then stores the window display data corresponding to the preloaded target application in the second memory buffer area.

Optionally, when dividing the second memory buffer, the terminal detects a remaining size of the current memory, and when the remaining memory is greater than the threshold, performing the step of storing the window display data in the second memory buffer; when the remaining memory is less than the threshold, The terminal determines that the target application cannot be loaded currently and stops loading the target application.

Step 305: rendering and displaying the application window in the virtual screen according to the window display data.

In a possible implementation, the terminal acquires the size of the virtual screen, determines the size of the application window display according to the virtual screen, and enables the built-in frame buffer area, renders the application window by using the frame buffer, and then displays the final rendering after the rendering completes.

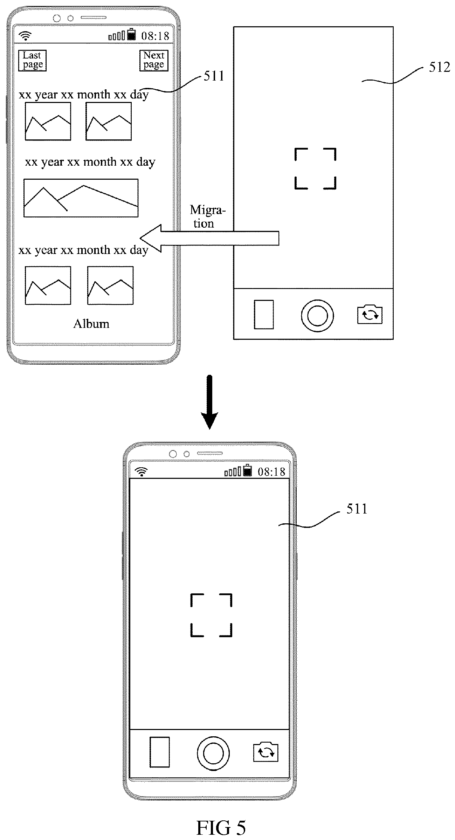

Schematically, as shown in FIG. 5, the application running in the foreground is an album application, and the application window corresponding to the album application is displayed in the physical screen 511, and the terminal determines the target application as a camera application according to the prediction model, and then renders the application window corresponding to the camera application within the virtual screen 512.

Step 306: removing the virtual screen if the running instruction of the target application is not received within a predetermined duration, or a remaining memory of the terminal is lower than a threshold.

Since the pre-loaded target application still occupies the terminal memory, in order to avoid the target application from not being actively opened by the user, resulting in the memory occupation time is too long. In a possible implementation, if the running instruction of the target application is not received within the predetermined duration, the terminal removes the virtual screen to reduce the memory pressure; where the predetermined duration can be 10 minutes.

In another possible implementation, the terminal monitors the memory size in real time, and when a remaining memory is detected to be lower than the threshold, the virtual screen is removed, thereby preventing the preloaded target application from occupying too much memory and affecting the normal running of the terminal.

Where, the process of removing the virtual screen is the process of releasing the second memory buffer space.

Step 307: migrating the application window corresponding to the target application to the physical screen in response to receiving a running instruction of the target application.

The implementation of this step is similar to the aforementioned step 104, and details are not described herein again.

Illustratively, as shown in FIG. 5, in response to receiving a running instruction to the camera application, the terminal migrates the application window of the camera application to the physical screen 511, then the camera application is displayed in the physical screen 511.

Step 308, migrating the window display data from the second memory buffer area to the first memory buffer area.

The first memory buffer area corresponds to the physical screen, and the window display data corresponding to the target application is stored in the second memory buffer area. When the target application is opened again, the terminal cannot display the application window in the physical screen according to the window display data in the second memory buffer area, so the window display data stored in the second memory buffer area needs to be correspondingly migrated to the first memory buffer area, so that the target application can be normally opened when the target application in the background is run again after the terminal switches the application.

Optionally, after the window display data is migrated from the second memory buffer area to the first memory buffer area, the terminal removes the virtual screen and cancels the division of the second memory buffer area.

In a possible implementation, after receiving the running instruction of the target application, the terminal migrates the window display data from the second memory buffer area to the first memory buffer area. In another possible implementation, the migration of window display data can be performed after the migration of the application window corresponding to the target application is completed by the terminal. This embodiment does not limit the execution timing of this step.

In this embodiment, the terminal trains the prediction model according to the sample status data and the sample application data, and then determines the target application based on the prediction model and the acquired status data. Since the establishment of the prediction model is based on the historical operation of the user, the obtained target application is more suitable for the user's actual usage habits.

In this embodiment, when the terminal does not receive the running instruction of the target application or a remaining memory of the terminal is low, the terminal automatically removes the virtual screen, thereby reducing the memory pressure when the terminal is running, and avoiding affecting the normal use of the terminal because of preloading of the application.

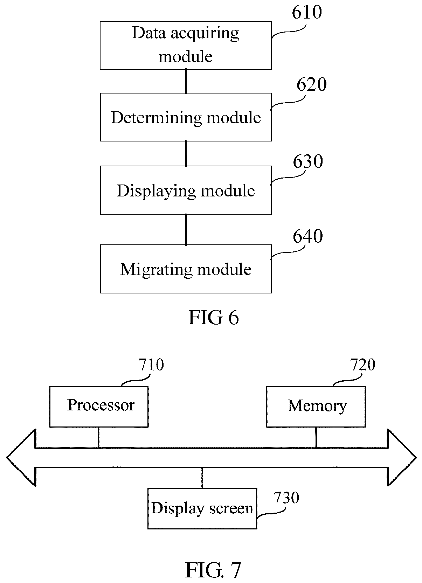

Referring to FIG. 6, a structural block diagram of a device for processing application provided by an example embodiment of the present application is shown. The device for processing application can be implemented as all or part of the terminal by software, hardware, and a combination of both. The device for processing application includes: a data acquiring module 610, a determining module 620, a displaying module 630, and a migrating module 640:
the data acquiring module 610, configured to acquire status data, the status data indicating a running status of the terminal;
the determining module 620, configured to determine, according to the status data, a target application to be preloaded;
the displaying module 630, configured to display an application window corresponding to the target application in the virtual screen, the display area corresponding to the virtual screen is located outside the display area corresponding to the physical screen;
the migrating module 640, configured to migrate the application window corresponding to the target application to the physical screen a running instruction of the target application is received.

Optionally, the display content in the physical screen is stored in the first memory buffer area;

The device includes a loading module, and the loading module is configured to loading application resource corresponding to the target application, and obtaining window display data corresponding to the application window. The displaying module 630 includes:
a storing unit, configured to store window display data to a second memory buffer area;
a rendering unit, configured to render and display the application window in the virtual screen according to the window display data;
the device also includes:
   a data migrating module, configured to migrate window display data from the second memory buffer area to the first memory buffer area.

Optionally, the device further includes:
a removing module, configured to remove the virtual screen if the running instruction of the target application is not received within a predetermined duration, or a remaining memory of the terminal is lower than the threshold.

Optionally, the determining module 620 is further configured to:
input the status data into the prediction model to obtain a target application, and where the prediction model is obtained by training based on the sample status data and the sample application data.

Optionally, the status data includes at least one of the following:
data indicating a time period in which the current time is;
data indicating applications running in the foreground; and
data indicating the current geographic location.

Optionally, the device further includes at least one of the following:
a first training module, configured to acquire an application identifier of an application running in the terminal in different time periods; and train the prediction model based on the time period and the application identifier;
a second training module, configured to acquire an application jumping record, where the application jumping record indicating jumping from a first application to a second application; and train the prediction model based on an application identifier of the first application and an application identifier of the second application; and
a third training module, configured to acquire an application opening record, where the application opening record includes the geographic location data and an application identifier of the opened application; and train the prediction model based on the geographic location data and the application identifier.

In summary, in the embodiment of the present application, the terminal determines the target application to be preloaded according to the status data, and then loads the target application in advance, and displays the application window corresponding to the target application in the virtual screen, when the target application needs to be run, the terminal can directly migrate the application window displayed in the virtual screen to the physical screen for display. After the target application is preloaded by the aforementioned preloading mechanism, when the target application needs to be run, only needs to migrate the application window in the virtual screen to the physical screen without reloading the application resource of the target application, thereby improving the display efficiency of the application interface, solving the problem of display delay of the application interface; at the same time, since the virtual screen is outside the display area of the physical screen, the display content in the virtual screen does not affect the display content in the physical screen, and the normal running of foreground application is guaranteed.

In this embodiment, the terminal trains the prediction model according to the sample status data and the sample application data, and then determines the target application based on the prediction model and the acquired status data. Since the establishment of the prediction model is based on the historical operation of the user, the acquired target application is more suitable for the user's actual usage habits.

In this embodiment, when the terminal does not receive the running instruction to the target application or a remaining memory of the terminal is low, the terminal automatically removes the virtual screen, thereby reducing the memory pressure when the terminal is running, and avoiding affecting the normal use of the terminal because of preloading of the application.

It should be noted that, when the device for processing application provided by the foregoing embodiment is used for processing the application, the division of each aforementioned functional module is used as an example only. In actual applications, the functions may be allocated to be achieved by different functional modules according to requirements, that is, the internal structure of the device is divided into different functional modules to complete all or part of the aforementioned functions. In addition, the device for processing application and the method for processing application embodiment provided by the foregoing embodiments are in the same concept, and the specific implementation process is described in detail in the method embodiment, and details are not described herein again.

Referring to FIG. 7, a structural block diagram of a terminal provided by an example embodiment of the present application is shown. A terminal of the present application may include one or more of the following components: a processor 710, a memory 720, and a display screen 730.

The processor 710 can include one or more processing cores. The processor 710 connects various portions of the entire terminal using various interfaces and lines, by running or executing instructions, programs, code sets or instruction sets stored in the memory 720, and invoking data stored in the memory 720, executing various functions of the terminals and processing data. Optionally, the processor 710 may implemented by using at least one hardware form of a digital signal processing (DSP), a Field-Programmable Gate Array (FPGA), and a Programmable Logic Array (PLA). The processor 710 can integrate one or a combination of a central processing unit (CPU), a modem, and the like. Among them, the CPU mainly processes operating systems and applications, etc.; the modem is used to process wireless communication. It can be understood that the aforementioned modem may also not be integrated into the processor 710 and implemented by a single chip.

Optionally, when the processor 710 executes the program instructions in the memory 720, the method for processing application provided by the aforementioned various method embodiments is implemented.

The memory 720 may include a random access memory (RAM), and may also include a read-only memory. Optionally, the memory 720 includes a non-transitory computer-readable storage medium. Memory 720 can be used to store instructions, programs, code, code sets, or instruction sets. The memory 720 can include a storage program area and an storage data area, where the storage program area can store instructions for implementing an operating system, instructions for at least one function, instructions for implementing the aforementioned various method embodiments, and the like; the storage data area can store the data created according to the use of the terminal and the like.

The embodiment of the present application further provides a computer readable medium storing at least one instruction, the at least one instruction is loaded and executed by the processor to implement the method for processing application as described in various embodiments above.

The embodiment of the present application further provides a computer program product, where the computer program product stores at least one instruction, and the at least one instruction is loaded and executed by the processor to implement the method for processing application described in the foregoing embodiments.

The order of the aforementioned embodiments is merely for the description, and does not represent the advantages and disadvantages of the embodiments.

A person skilled in the art can understand that all or part of the steps of implementing the aforementioned embodiments may be completed by hardware, or may be instructed by a program to execute related hardware, and the program may be stored in a computer readable storage medium. The storage medium mentioned may be a read only memory, a magnetic disk or an optical disk or the like.

The above is only the preferred embodiment of the present application, and is not intended to limit the present application. Any modifications, equivalent substitutions, improvements, etc. made within the spirit and principles of the present application are included in the protection scope of the present application.

## Claims

1. A method for processing an application, performed by a processor executing instructions stored on a memory, comprises:
acquiring (101, 301) status data, wherein the status data indicating a running status of a terminal;
determining (102), according to the status data, a target application to be preloaded;
displaying (103) an application window corresponding to the target application in a virtual screen, wherein a display area corresponding to the virtual screen is located outside a display area corresponding to a physical screen; and
migrating (104, 307) the application window corresponding to the target application to the physical screen in response to receiving a running instruction of the target application.

2. The method according to claim 1, further comprising:
loading (303) an application resource corresponding to the target application, and obtaining window display data corresponding to the application window;
wherein the displaying an application window corresponding to the target application in a virtual screen comprises:
storing (304) the window display data to a second memory buffer area;
rendering (305) and displaying the application window in the virtual screen according to the window display data.

3. The method according to claim 1 or 2, wherein display content in the physical screen is stored in a first memory buffer area, the method further comprises:
migrating (308) the window display data from the second memory buffer area to the first memory buffer area.

4. The method according to any one of claims 1-3, further comprising:
removing (306) the virtual screen if the running instruction of the target application is not received within a predetermined duration, or a remaining memory of the terminal is lower than a threshold.

5. The method according to any one of claims 1-4, wherein the determining, according to the status data, a target application to be preloaded comprises:
inputting (302) the status data into a prediction model to obtain the target application, and wherein the prediction model is obtained by training based on sample status data and sample application data.

6. The method according to any one of claims 1-5, wherein the status data comprises at least one of:
data indicating a time period in which a current time is;
data indicating applications running in foreground; and
data indicating the current geographic location.

7. The method according to any one of claims 1-6, further comprising:
acquiring an application identifier of an application running by the terminal in different time periods;
training the prediction model based on the time period and the application identifier.

8. The method according to any one of claims 1-7, further comprising:
acquiring an application jumping record, wherein the application jumping record indicating jumping from a first application to a second application;
training the prediction model based on an application identifier of the first application and an application identifier of the second application.

9. The method according to any one of claims 1-8, further comprising:
acquiring an application opening record, wherein the application opening record containing geographic location data and an application identifier of an opened application; training the prediction model based on the geographic location data and the application identifier.

10. A device for processing an application, wherein the device comprises a processor (710) and a memory (720) storing instructions thereon, the processor (710) when executing the instructions, being configured to:
acquire status data, wherein the status data indicating a running status of a terminal;
determine, according to the status data, a target application to be preloaded;
display an application window corresponding to the target application in a virtual screen, wherein a display area corresponding to the virtual screen is located outside a display area corresponding to a physical screen; and
migrate the application window corresponding to the target application to the physical screen in response to receiving a running instruction of the target application.

11. The device according to claim 10, wherein the processor (710) is further configured to:
load application resource corresponding to the target application, and obtain window display data corresponding to the application window;
store the window display data to a second memory buffer area;
render and display the application window in the virtual screen according to the window display data.

12. The device according to claim 10 or 11, wherein display content in the physical screen is stored in a first memory buffer area, the processor (710) is further configured to:
migrate the window display data from the second memory buffer area to the first memory buffer area.

13. The device according to any one of claims 10-12, wherein the processor (710) is further configured to:
remove the virtual screen if the running instruction of the target application is not received within a predetermined duration, or a remaining memory of the terminal is lower than a threshold.

14. The device according to any one of claims 10-13, wherein the processor (710) is further configured to:
input the status data into a prediction model to obtain the target application, and wherein the prediction model is obtained by training based on sample status data and sample application data.

15. A computer readable storage medium, wherein the storage medium stores at least one instruction loaded and executed by a processor to implement the method for processing an application according to any one of claims 1-9.
